# FASCICULE DE BREVET EUROPEEN

(11) **EP 3 109 790 B1**
(45) Date de publication et mention de la délivrance du brevet: **31.07.2019**
(21) Numéro de dépôt: 16176047.5
(22) Date de dépôt: 23.06.2016
(51) Int. Cl.: G06F 21/60, H04L 12/28, H04W 12/02, H04N 21/41, H04L 29/08, H04L 29/06, H04W 4/00, H04W 84/12, H04N 21/235, H04N 21/254, H04N 21/4367, H04W 48/14, H04W 84/18, H04W 4/80, H04W 76/11, H04N 21/436

(54) **DISPOSITIF DE COMMUNICATION COURTE DISTANCE, ADAPTE POUR DONNER ACCES A UN SERVICE DISTANT**
NAHFELDKOMMUNIKATIONSVORRICHTUNG, DIE GEEIGNET IST, ZUGANG ZU EINEM FERNSERVICE ZU GEWÄHREN
NEAR-FIELD COMMUNICATION DEVICE, SUITABLE FOR PROVIDING ACCESS TO A REMOTE SERVICE

(30) Priorité: 26.06.2015 FR 1555997
(43) Date de publication de la demande: 28.12.2016
(73) Titulaire: Orange, 75015 Paris (FR)
(72) Inventeur: VINCENT, Yoann, 94230 Cachan (FR); BRICHETEAU, Dimitri, 35000 Rennes (FR)
(74) Mandataire: Cabinet Plasseraud

(56) Documents cités:
- US-A1- 2014 354 441
- US-B1- 9 037 683
- "Guidelines for Implementation of REST", , 25 mars 2011 (2011-03-25), pages 1-19, XP055267226, Extrait de l'Internet: URL:https://www.nsa.gov/ia/_files/support/ guidelines_implementation_rest.pdf [extrait le 2016-04-20]

## Description

La présente invention concerne le domaine des communications courte-distance entre équipements électroniques.

Au sein du réseau local familial (ex. le réseau local - WiFi ou filaire - crée par la passerelle Internet dans un domicile), le nombre de fonctionnalités multimédia associées aux équipements électroniques connectés augmente de manière significative depuis les dernières années : ces équipements peuvent être des enceintes audio sans fil, des clefs USB, des détecteurs de présence, des casques audio, etc.

Afin de pouvoir interagir avec ces équipements (ex. pour pouvoir les configurer ou consulter leur contenu), et faciliter l'expérience d'un utilisateur lors d'une interaction avec ces équipements électroniques, la Demanderesse a proposé, en complément d'une passerelle domestique (de type Livebox® par exemple), un dispositif de communication se présentant sous la forme d'un boitier multimédia, notamment pour le partage de contenus entre équipements domestiques. Un tel dispositif de communication, commercialisé sous le nom « Homepoint »®, a ainsi les fonctionnalités d'un concentrateur communicant (ou « Hub »), entre tous les appareils domestiques Wi-Fi/Bluetooth connectés. Dans une forme de réalisation actuelle, en procédant à l'appairage de ce dispositif « concentrateur » avec la passerelle domestique, une synchronisation s'effectue en Wi-Fi et le dispositif concentrateur identifié sur le réseau (comme « Homepoint ») peut alors partager ses contenus avec le réseau local animé par la passerelle, et en particulier avec tous les appareils Wi-Fi/Bluetooth connecté à ce réseau local.

Une fois les appareils domestiques associés, il suffit, lors de la lecture par exemple d'une musique, d'un film ou du visionnage de photos ou de fichiers, de sélectionner l'option de lecture correspondante sur une interface de programmation dont est équipé le dispositif concentrateur Homepoint, afin de choisir une source de contenu parmi les équipements domestiques. Le dispositif concentrateur est par ailleurs connecté à un ou plusieurs équipements de lecture (par une prise « Jack » par exemple pour de la musique) pour une lecture des contenus sélectionnés.

Par contre, le dispositif concentrateur n'est pas configuré (ni protégé) pour donner accès à des applications extérieures. Par exemple, on ne peut pas accéder via un tel dispositif à des services de stockage « par informatique en nuage » (stockage sur le « cloud » ci-après) ou recevoir des contenus par « diffusion en flux » (ou « streaming » ci-après) pour des abonnés à un tel service de streaming.

Un dispositif multimédia capable de se connecter à des applications extérieures est divulgué dans la demande de brevet US2014/0354441 A1.

La présente invention vient améliorer la situation.

Elle propose à cet effet un dispositif concentrateur (de type « Homepoint® » décrit ci-avant), configuré pour communiquer avec un terminal grâce à une connexion sans fil courte distance, le dispositif concentrateur étant apte à se connecter en outre à un service distant. Plus particulièrement, le dispositif est configuré pour :
/a/ recevoir du terminal une requête d'accès au service distant, la requête d'accès comprenant des paramètres d'identification audit service,
/b/ stocker en mémoire les paramètres d'identification de la requête reçue, pour émettre vers le service distant une seconde requête d'accès comprenant les paramètres d'identification,
/c/ sur réponse du service distant à la seconde requête, opérer un transfert de données relatives au service,
le stockage en mémoire des paramètres d'identification de la requête reçue du terminal étant, en particulier, temporaire, le dispositif concentrateur étant configuré en outre pour supprimer de la mémoire les paramètres d'identification après détection d'une déconnexion entre le terminal et le dispositif concentrateur.

Ainsi, un utilisateur indélicat ne peut pas accéder à nouveau au service distant avec les paramètres d'identification d'un utilisateur précédent. Par exemple, pour un service de stockage sur le cloud, le compte de connexion à ce service de chaque utilisateur du dispositif concentrateur n'est accessible que temporairement seulement grâce à l'invention. Ainsi, un autre utilisateur ne peut pas accéder à ce service et consulter des données (photos, vidéos, etc.) d'un compte d'un utilisateur précédent du dispositif concentrateur. Une telle réalisation améliore avantageusement la confidentialité et la sécurité de l'utilisation du dispositif de l'invention.

Dans une forme de réalisation, le dispositif est configuré en outre pour supprimer de la mémoire les paramètres d'identification, au moins après détection d'une fin de transfert de données. Ainsi par exemple, dans le cas de transfert de données (privées) vers le cloud, après une période d'inactivité du transfert (éventuellement à la suite d'une temporisation), le dispositif peut effacer de sa mémoire les paramètres d'identification qui ont permis d'accéder au compte pour ce service.

Le dispositif est configuré pour supprimer de la mémoire les paramètres d'identification après détection d'une déconnexion entre le terminal et le dispositif concentrateur. Par exemple, il peut être prévu pour un service de streaming (avec abonnement tel que le service Deezer® par exemple) d'effacer les paramètres d'identification qui ont été donnés par un terminal dont il a été détecté une déconnexion avec le dispositif concentrateur. Dans ce cas encore, le transfert des données de streaming cesse et le service est interrompu.

Dans une forme de réalisation, le dispositif concentrateur peut être configuré pour accéder au service distant via une passerelle entre un réseau local et un réseau étendu, le service distant étant accessible sur le réseau étendu. Ainsi par exemple, dans cette réalisation, la déconnexion précitée du terminal avec le dispositif concentrateur peut correspondre plus généralement au fait que ce terminal quitte le réseau local.

Dans une forme de réalisation, le dispositif concentrateur comportant une pluralité de ports de connexion, le dispositif concentrateur peut être configuré en outre pour :
- identifier un port du dispositif en fonction de la requête, et
- sur réponse du service distant à la seconde requête, associer le port identifié au service distant.

Une telle réalisation permet avantageusement d'adresser directement le port de connexion à un équipement apte à utiliser ou coopérer avec le service distant, sans qu'un utilisateur n'ait à designer cet équipement. A ce titre, cette réalisation peut faire l'objet d'une protection séparée.

Par exemple, dans le cas d'un service distant comportant une utilisation de données issues du terminal (comme le service de stockage sur le cloud, remontant des données du terminal telles que des données de photos, vidéos, etc.), le dispositif concentrateur peut comporter au moins un port de connexion à une mémoire de stockage, de sorte que le dispositif concentrateur peut être agencé en outre pour :
- recevoir du terminal la requête d'accès au service distant, et des données à transférer au service distant,
- identifier, en fonction de la requête, le port de connexion à la mémoire de stockage, pour stocker les données reçues du terminal dans la mémoire de stockage, et
- sur réponse du service distant, commencer un transfert des données depuis la mémoire de stockage vers le service distant.

Une telle réalisation est avantageuse dans la mesure où le dispositif concentrateur réalise la fonction de « mémoire tampon » entre le terminal et le service distant. Ainsi, le terminal peut être libéré pour être utilisé à des fins d'autres applications que le transfert de données au service distant.

Avantageusement, le dispositif concentrateur peut être agencé en outre pour supprimer de la mémoire de stockage les données reçues du terminal, au moins après détection d'une fin de transfert des données. Cette réalisation permet de ne pas rendre accessible des données ainsi stockées à d'autres utilisateurs ultérieurs, par exemple.

Dans un autre exemple de réalisation dans lequel le service distant comporte une transmission de données multimédias pour être lues par un appareil de rendu multimédia (par exemple pour session de streaming), le dispositif concentrateur peut comporter au moins un port de connexion à un appareil de rendu multimédia, et être agencé en outre pour :
- recevoir du terminal la requête d'accès au service distant,
- identifier, en fonction de la requête, le port de connexion à l'appareil de rendu multimédia, en tant qu'appareil de rendu apte à lire un type de données multimédias associé à la requête, et
- sur réponse du service distant, transférer les données vers ledit appareil de rendu apte à lire le type de données multimédias associé à la requête.

Dans une forme de réalisation permettant l'identification des ports utiles pour le service, le dispositif concentrateur est apte à se connecter au service distant via une interface de programmation, pour émettre via l'interface de programmation la seconde requête précitée, d'accès au service distant. En particulier, l'interface de programmation utilise une table de correspondance pour identifier un port du dispositif en fonction de la requête et associer le port identifié au service distant. Ainsi, cette table de correspondance peut établir une relation entre le service distant ou le type de service distant, d'une part, et le (ou les) port(s) de connexion à activer pour l'utilisation de ce service (ou type de service), d'autre part. Cette table de correspondance peut indiquer en outre le type de détection à mettre en oeuvre avant d'effacer les paramètres d'identification en fonction du service (ou type de service requis) : par exemple après une déconnexion du terminal (pour un service de streaming) ou après une fin de transfert de données (pour un service de stockage sur le cloud). Cette table de correspondance peut être stockée dans une mémoire du dispositif concentrateur, accessible pour l'interface de programmation.

La présente invention vise aussi un procédé de connexion à un service distant via un dispositif de type concentrateur au sens de l'invention, le dispositif concentrateur étant configuré alors pour communiquer avec un terminal requérant l'accès au service grâce à une connexion sans fil courte distance, le dispositif concentrateur étant apte à se connecter en outre au service distant. Le procédé comporte ainsi les étapes mises en oeuvre par le dispositif concentrateur :
/a/ recevoir du terminal une requête d'accès au service distant, la requête d'accès comprenant des paramètres d'identification audit service,
/b/ stocker en mémoire les paramètres d'identification de la requête reçue, pour émettre vers le service distant une seconde requête d'accès comprenant les paramètres d'identification,
/c/ sur réponse du service distant à la seconde requête, opérer un transfert de données relatives au service,
le stockage en mémoire des paramètres d'identification de la requête reçue du terminal étant temporaire, le dispositif concentrateur étant configuré en outre pour supprimer de la mémoire les paramètres d'identification après détection d'une déconnexion entre le terminal et le dispositif concentrateur.

Un programme informatique, mettant en oeuvre tout ou partie du procédé décrit ci-avant, installé sur un équipement préexistant, est en lui-même avantageux.

Ainsi, la présente invention vise également un programme informatique comportant des instructions pour la mise en oeuvre du procédé précédemment décrit, lorsque ce programme est exécuté par un processeur.

Ce programme peut utiliser un langage quelconque de programmation (par exemple, un langage-objet ou autre), et être sous la forme d'un code source interprétable, d'un code partiellement compilé ou d'un code totalement compilé.

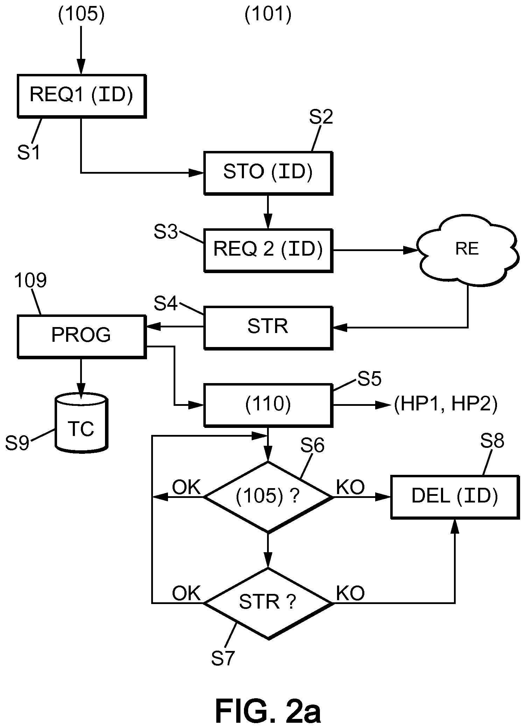

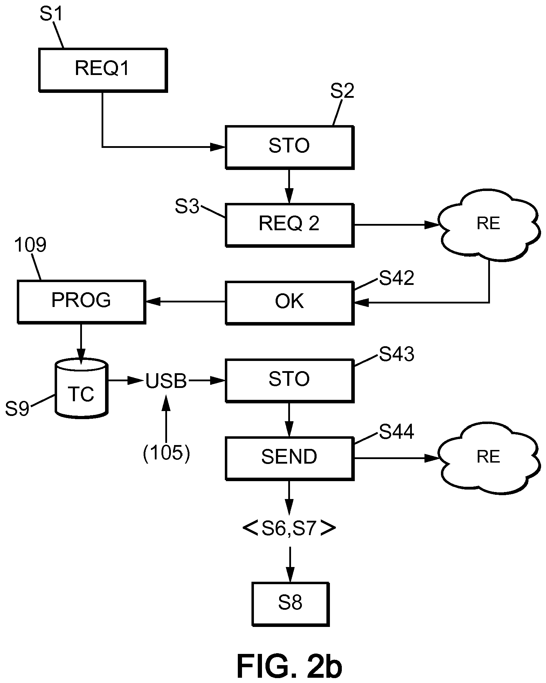

Les figures 2a et 2b décrites en détail ci-après, peuvent former l'organigramme de l'algorithme général d'un tel programme informatique.

D'autres caractéristiques et avantages de l'invention apparaîtront encore à la lecture de la description qui va suivre. Celle-ci est purement illustrative et doit être lue en regard des dessins annexés sur lesquels :
- la figure 1 illustre un réseau local comprenant un dispositif concentrateur selon un mode de réalisation de l'invention ;
- la figure 2a présente un ordinogramme mis en oeuvre par un dispositif concentrateur, selon une première application de l'invention ;
- la figure 2b présente un ordinogramme mis en oeuvre par un dispositif concentrateur, selon une deuxième application de l'invention ;
- la figure 3 illustre un dispositif concentrateur dans un mode de réalisation de l'invention.

L'invention concerne l'utilisation d'un dispositif concentrateur (tel que le « Homepoint »®) en tant que relais d'identification pour un terminal, pour une identification à des services comme le stockage par informatique en nuage (ou « cloud »), ou encore pour recevoir un contenu multimédia en ligne (musique, vidéo ou autre).

Un tel dispositif concentrateur est décrit en détail notamment dans le document FR-1455798.

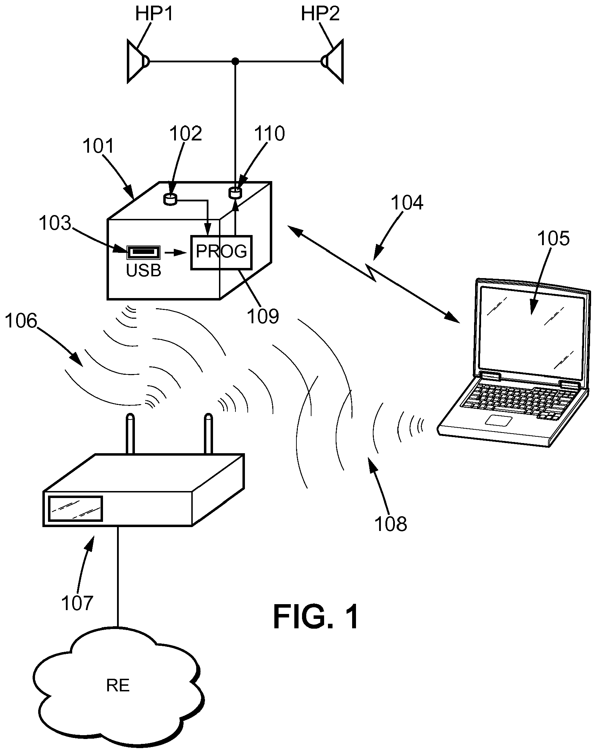

La figure 1 illustre un réseau local, animé par une passerelle 107, et auquel est relié un dispositif concentrateur 101 selon un mode de réalisation de l'invention.

Dans ce mode de réalisation, le dispositif concentrateur 101 comporte plusieurs organes d'interaction reliés à une interface de programmation 109 :
- un bouton 102 avec lequel un utilisateur peut interagir en appuyant dessus selon un procédé déterminé (ex. un appui court, un appui long, etc.),
- un port USB 103 avec lequel un utilisateur peut interagir en insérant une clef USB ou tout autre équipement USB dedans.

Bien entendu, le dispositif de communication peut comporter d'autres dispositifs d'interaction comme des ports de type « FireBolt », « HDMI », « Ethernet », « Jack » (référence 110 de la figure 1) ou tout autre type de port, notamment pour une connexion à des équipements de rendu multimédia (enceintes sonores référencées HP1 et HP2 sur la figure 1, écran, ou autres).

Lors d'une interaction avec au moins un organe d'interaction, le dispositif concentrateur 101 peut se mettre à la recherche de terminaux 105 à proximité. Cette recherche peut prendre plusieurs formes :
- émission d'un paquet de diffusion ou (« broadcast » en anglais) sur le réseau local à destination des terminaux connectés ;
- activation d'un émetteur/récepteur de type NFC (ou « de communication en champ proche ») ;
- émission d'un paquet de diffusion ou (« broadcast » en anglais) sur un réseau sans-fil (par exemple sur un réseau Bluetooth ou un réseau dit « Bluetooth Low Energy » en anglais ou BLE). Le paquet peut alors être un paquet de type iBeacon™.

Le fait que le dispositif 101 se mette à la recherche de terminaux 105 à proximité signifie que ce dispositif 101 se met dans une configuration susceptible de détecter un terminal 105 à proximité (ex. activation d'un récepteur de communication en champ proche) ou susceptible de permettre une détection par un terminal 105 à proximité de la présence du dispositif 101 (ex. émission d'un message de diffusion sur un réseau).

Le réseau 104 utilisé pour cette détection peut avantageusement être distinct du réseau WiFi (réseau local) créé par la passerelle Internet 107.

Une fois la détection d'une proximité entre le terminal 105 et le dispositif 101 (ex. détection d'une distance inférieure à un seuil prédéterminé), le terminal 105 peut contacter le dispositif 101 via le réseau local créé par la passerelle Internet 107 du domicile (ex. WiFi ou filaire). Ainsi, il est utile que le dispositif 101 soit connecté à ce réseau local (lien 106) et que le terminal 105 soit connecté à ce réseau local (lien 108).

L'adresse de contact (ex. l'adresse IP du dispositif 101) peut être préconfigurée dans le terminal 105. Cette adresse de contact peut également être déterminée par un mécanisme de découverte réseau de type « Bonjour », « Avahi », « Pastry », « ZeroConf », « UPnP », « SNMP », etc.

Le terminal 105 peut alors effectuer une requête auprès du dispositif 101.

Par ailleurs, le dispositif concentrateur 101 étant connecté à la passerelle 107, le dispositif 101 peut accéder via la passerelle à un service distant disponible sur le réseau étendu RE (Internet).

Plus particulièrement, le dispositif 101 peut donner au terminal 105 accès à des services prédéfinis via des programmes de type API (pour « Application Program Interface »). Via une application dédiée sur le terminal 105 utilisant les APIs précités, un utilisateur peut alors piloter le terminal 105 pour requérir au dispositif 101 de se connecter à un service distant (tel qu'une application de streaming audio de type Deezer® à titre d'exemple purement illustratif ici).

Ainsi, à l'étape S1 de la figure 2a, le terminal 105 fournit au dispositif 101 des paramètres d'accès (incluant typiquement des paramètres d'identification ID auprès du service) dans une première requête REQ1. A l'étape S2, le dispositif 101 stocke temporairement (par exemple dans une mémoire volatile qu'il comporte) ces paramètres d'identification ID. Une fois cette étape S2 mise en oeuvre, toute nouvelle demande de connexion issue du terminal 105 pour ce service peut le cas échéant réutiliser les paramètres d'identification ID sauvegardés par le dispositif 101.

Le dispositif 101 peut alors former une seconde requête REQ2 élaborée par exemple par son interface de programmation 109 et s'identifier ainsi auprès du service à l'étape S3, pour recevoir à l'étape S4 les données du flux audio associées au service de streaming, via la passerelle 107. A l'étape S5, le dispositif 101 transmet ces données audio sur l'un de ses ports (par exemple le jack 110) relié dans cet exemple de réalisation à un dispositif de restitution audio comportant les enceintes HP1, HP2 (comme des enceintes connectées en Bluetooth).

Ensuite, si l'utilisateur interrompt la séquence de streaming à l'étape S6 ou si par exemple le dispositif 101 détecte que le terminal 105 a quitté le réseau local, le dispositif 101 peut alors effacer les paramètres d'identification ID de sa mémoire à l'étape S8. De même, lorsque le transfert de données devient inactif, signifiant dans cet exemple de réalisation que la séquence de streaming est achevée à l'étape S7, le dispositif 101 peut effacer les paramètres d'identification de sa mémoire à l'étape S8, éventuellement après une temporisation. Ainsi, la fin du transfert de données peut conditionner la suppression des paramètres d'identification, selon le test S7.

En outre, selon une autre caractéristique avantageuse de l'invention (pouvant d'ailleurs faire l'objet d'une protection séparée), comme le dispositif concentrateur 101 comporte une pluralité de ports (USB, Jack, etc.), il convient de gérer correctement l'adressage du port à solliciter pour utiliser le service sur un équipement adéquat. Ici, comme la seconde requête d'accès au service distant REQ2 est émise via l'interface de programmation 109, cette dernière 109 peut avantageusement se référer à une table de correspondance TC (stockée dans une mémoire non-volatile par exemple), à l'étape S9, pour identifier un port du dispositif 101 en fonction de la requête et convenant pour utiliser le service distant. Par ailleurs, l'interface de programmation 109 peut gérer en outre le stockage (temporaire) de plusieurs identifiants ID à la fois, pour différents services et/ou pour différents terminaux du réseau local.

Ainsi, le service sollicité implique nécessairement l'un au moins des ports du dispositif 101. Pour l'application de streaming audio présentée ci-avant, la sortie du jack audio 110 est utilisée. En revanche, pour une autre application telle qu'un stockage sur le cloud, le port auquel est connecté un moyen de stockage de masse, tel qu'une clé USB, un disque dur externe ou une carte SD contenant des données à stocker, est sollicité. Dans ce cas en outre, le port sollicité est un port d'entrée, tandis que dans l'application décrite ci-avant en référence à la figure 2a, le port sollicité était un port de sortie. Ce port est fonction du service, et donc de la requête d'accès émise. Il est alors décrit ci-après en référence à la figure 2b une deuxième application de l'invention relative à une transmission de données pour un stockage sur le cloud, sollicitant un port d'entrée du concentrateur (le port USB 103 dans cet exemple de réalisation). Les étapes S1, S2, S3 ; S6, S7, S8 et S9 sont similaires à celles décrites ci-avant en référence à la figure 2a et ne sont pas détaillées à nouveau ici.

Dans l'exemple de réalisation de la figure 2b, la requête de service issue du terminal 105 à l'étape S1 consiste en une demande de stockage de données sur le cloud. Ainsi, après acceptation du service distant de recevoir des données à stocker sur le cloud à l'étape S42, l'interface de programmation met en oeuvre l'étape S9 de détermination du port à solliciter pour mettre en oeuvre le service. Dans cet exemple de réalisation, l'interface de programmation désigne le port USB 103 car, avantageusement, on prévoit, à l'étape S43, un stockage temporaire des données à envoyer ultérieurement sur le cloud à l'étape S44. En effet, ici, le terminal 105 se connecte au dispositif concentrateur 101 pour lui transmettre, outre la requête de service REQ1, les données à stocker sur le cloud. En particulier, le dispositif 101 stocke ces données temporairement sur une clé USB ou sur un disque dur externe relié au port 103 (étape S43). Ainsi, le terminal 105 est libéré du transfert de données et peut être utilisé pour d'autres applications, tandis que le dispositif concentrateur 101 se charge de la transmission des données depuis son port USB 103 (étape S44) à un serveur distant assurant le service de stockage sur le cloud.

Ici, lorsque le transfert de données devient inactif, signifiant dans cet exemple de réalisation que l'ensemble des données à stocker dans le cloud a été transmis à l'étape S7, le dispositif 101 peut effacer les paramètres d'identification de sa mémoire à l'étape S8, éventuellement après une temporisation. L'étape S6 peut ne pas être mise en oeuvre de sorte que le terminal 105 peut quitter le réseau local sans que cela interrompe la transmission de données vers le cloud.

Ainsi, comme dans certains cas la remontée de contenus (photos, vidéos, musique) vers le cloud peut prendre beaucoup de temps (une ligne ADSL ayant un débit remontant limité), il est avantageux d'utiliser le dispositif concentrateur 101 comme « relais de service ». Il est possible de disposer d'une application installée dans un tel dispositif concentrateur 101, pour y associer différents services (cette application étant exécutée par exemple par l'interface de programmation 109). Via une telle application, il est alors possible de sélectionner des contenus (photos, musique, vidéos) stockés par exemple sur une clé USB connectée via le port 103, puis sélectionner ensuite le service et un dossier du cloud où copier ces contenus. Comme détaillé ci-avant, les contenus et les éléments de connexion au service sont transférés au dispositif concentrateur 101 (directement depuis la clé USB, comme à partir des étapes S9 et S43 de la figure 2b). Les contenus peuvent être en outre copiés temporairement dans une mémoire locale du dispositif concentrateur 101 (en cas de réception des données d'un terminal 105 via une liaison sans fil).

A titre d'exemple d'application possible, une carte mémoire d'appareil photo peut être connectée au dispositif concentrateur 101. Via l'application présente sur le dispositif concentrateur 101, il est possible de sélectionner des photos et/ou des vidéos, et ensuite le service de cloud « Onedrive® » par exemple (ou tout autre service de cloud) sur lequel il est souhaité d'envoyer les contenus. Les contenus sont alors copiés par exemple et de façon avantageuse sur une clé USB connectée au dispositif concentrateur 101, les informations de connexion au compte Onedrive étant aussi transférées.

Le dispositif concentrateur 101 transfère ensuite les contenus sur le service de cloud. Les informations sur le compte ne sont pas conservées ensuite par le dispositif concentrateur 101.

Cette fonctionnalité peut être utilisée par chaque membre d'une famille, chaque utilisateur pouvant avoir son propre compte et transférer ses contenus vers son compte de cloud. Cette fonctionnalité peut être utilisée en outre par un visiteur extérieur qui n'a pas vocation à revenir utiliser ultérieurement le dispositif concentrateur 101. Avantageusement, ses identifiants d'accès à son compte sont alors supprimés pour ne pas être réutilisés ultérieurement par un tiers malveillant.

En outre, avantageusement, l'application qu'exécute le dispositif concentrateur 101 dispose des APIs du service de cloud, ou encore d'autres services, par exemple d'un service de streaming (audio, vidéo ou autre). Dans ce dernier cas, par exemple pour un service de musique en ligne, on associe l'application correspondant à ce service à l'application qu'exécute le dispositif concentrateur 101. Dans ce cas, l'utilisateur peut envoyer au dispositif concentrateur 101, une liste de titres de musique avec ses identifiants de compte. Cette « playlist » est ensuite jouée directement par le dispositif concentrateur 101 auquel sont connectées les enceintes HP1 et HP2. Eventuellement, plusieurs utilisateurs peuvent se connecter au dispositif concentrateur 101 afin de contrôler la playlist en cours (avec des commandes de type « Play », « Pause », « Stop », « Next », etc.). Ils ont aussi la possibilité d'envoyer leurs propres playlists avec leurs propres données de comptes.

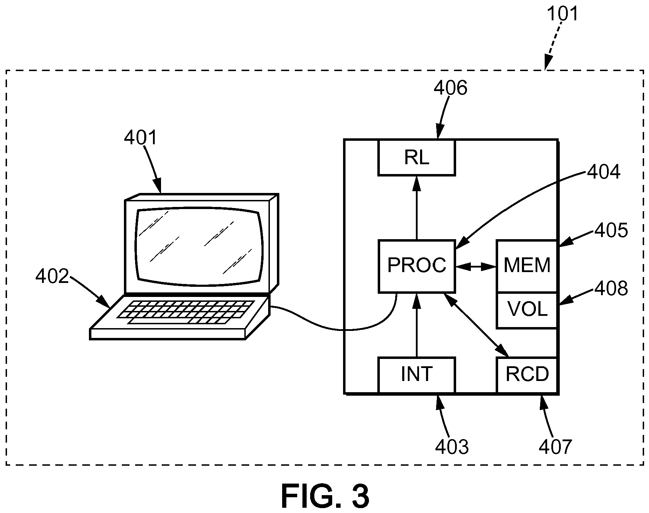

On a représenté sur la figure 3 un dispositif concentrateur 101 dans un mode de réalisation de l'invention. Dans ce mode de réalisation, le dispositif 101 comporte un équipement électronique, comprenant :
- une unité mémoire incluant une première mémoire 405 (par exemple non volatile) pour stocker des instructions permettant la mise en oeuvre du procédé,
- ainsi qu'une deuxième mémoire 408 (par exemple volatile) pour stocker les paramètres d'identification auprès des différents services distants, afin de réaliser les différentes étapes du procédé tel que décrit précédemment.

L'unité mémoire peut en outre stocker, le cas échéant, une pile d'identifiants (adresses IP, données de connexion aux terminaux du réseau local, etc.) et d'autres données qui peuvent être temporaires.

L'ordinateur comporte en outre un circuit 404. Ce circuit peut être, par exemple :
- un processeur apte à interpréter des instructions sous la forme de programme informatique, ou
- une carte électronique dont les étapes du procédé de l'invention sont décrites dans le silicium, ou encore
- une puce électronique programmable comme une puce FPGA (pour « Field-Programmable Gate Array » en anglais).

Ce dispositif 101 comporte un ou plusieurs dispositifs d'interaction 403 pour permettre l'interaction comme décrit précédemment, une interface d'un réseau courte distance telle qu'une interface Bluetooth ou NFC, et une interface à un réseau local 406 tel qu'une interface réseau WiFi. Enfin, le dispositif 101 peut comporter, de manière optionnelle, pour permettre une interaction aisée avec un utilisateur, un écran 401 et un clavier 402. Bien entendu, le clavier est facultatif, notamment dans le cadre d'un dispositif 101 ayant un écran tactile, par exemple.

Par ailleurs, le schéma fonctionnel présenté sur la figure 2a ou 2b est un exemple typique d'un programme dont certaines instructions peuvent être réalisées auprès du dispositif 101 décrit. À ce titre, la figure 2a ou 2b peut correspondre à l'organigramme de l'algorithme général d'un programme informatique au sens de l'invention.

Bien entendu, la présente invention ne se limite pas aux formes de réalisation décrites ci-avant à titre d'exemple ; elle s'étend à d'autres variantes.

D'autres réalisations sont possibles, notamment d'autres applications pour des services distants différents, et sollicitant des ports du dispositif différents de ceux décrits précédemment.

## Revendications

1. Dispositif concentrateur, configuré pour communiquer avec un terminal grâce à une connexion sans fil courte distance, le dispositif concentrateur étant apte à se connecter en outre à un service distant, le dispositif étant configuré pour :
/a/ recevoir du terminal une requête d'accès au service distant, la requête d'accès comprenant des paramètres d'identification audit service,
/b/ stocker en mémoire les paramètres d'identification de la requête reçue, pour émettre vers le service distant une seconde requête d'accès comprenant les paramètres d'identification,
/c/ sur réponse du service distant à la seconde requête, opérer un transfert de données relatives au service,
le stockage en mémoire des paramètres d'identification de la requête reçue du terminal étant temporaire,
le dispositif concentrateur étant configuré en outre pour supprimer de la mémoire les paramètres d'identification après détection d'une déconnexion entre le terminal et le dispositif concentrateur.

2. Dispositif selon la revendication 1, comportant une pluralité de ports de connexion, et étant configuré en outre pour :
- identifier un port du dispositif en fonction de la requête, et
- sur réponse du service distant à la seconde requête, associer le port identifié au service distant.

3. Dispositif selon la revendication 2, dans lequel le service distant comporte une utilisation de données issues du terminal, le dispositif concentrateur comportant au moins un port de connexion à une mémoire de stockage, et étant agencé en outre pour :
- recevoir du terminal la requête d'accès au service distant, et des données à transférer au service distant,
- identifier, en fonction de la requête, le port de connexion à la mémoire de stockage, pour stocker les données reçues du terminal dans la mémoire de stockage, et
- sur réponse du service distant, transférer les données depuis la mémoire de stockage vers le service distant.

4. Dispositif selon la revendication 3, étant agencé en outre pour supprimer de la mémoire de stockage les données reçues du terminal, au moins après détection d'une fin de transfert des données.

5. Dispositif selon la revendication 2, dans lequel le service distant comporte une transmission de données multimédias pour être lues par un appareil de rendu multimédia, le dispositif concentrateur comportant au moins un port de connexion à un appareil de rendu multimédia, et étant agencé en outre pour :
- recevoir du terminal la requête d'accès au service distant,
- identifier, en fonction de la requête, le port de connexion à l'appareil de rendu multimédia, en tant qu'appareil de rendu apte à lire un type de données multimédias associé à la requête, et
- sur réponse du service distant, transférer les données vers ledit appareil de rendu apte à lire le type de données multimédias associé à la requête.

6. Dispositif selon l'une des revendications 2 à 5, étant apte à se connecter au service distant via une interface de programmation, pour émettre via l'interface de programmation ladite seconde requête d'accès au service distant, l'interface de programmation utilisant une table de correspondance pour identifier un port du dispositif en fonction de la requête et associer le port identifié au service distant.

7. Dispositif selon l'une des revendications précédentes, configuré en outre pour supprimer de la mémoire les paramètres d'identification, au moins après détection d'une fin de transfert de données.

8. Dispositif selon l'une des revendications précédentes, configuré pour accéder au service distant via une passerelle entre un réseau local et un réseau étendu, le service distant étant accessible sur le réseau étendu.

9. Procédé de connexion à un service distant via un dispositif de type concentrateur, le dispositif concentrateur étant configuré pour communiquer avec un terminal requérant l'accès au service grâce à une connexion sans fil courte distance, le dispositif concentrateur étant apte à se connecter en outre au service distant,
le procédé comportant les étapes mises en oeuvre par le dispositif concentrateur :
/a/ recevoir du terminal une requête d'accès au service distant, la requête d'accès comprenant des paramètres d'identification audit service,
/b/ stocker en mémoire les paramètres d'identification de la requête reçue, pour émettre vers le service distant une seconde requête d'accès comprenant les paramètres d'identification,
/c/ sur réponse du service distant à la seconde requête, opérer un transfert de données relatives au service,
le stockage en mémoire des paramètres d'identification de la requête reçue du terminal étant temporaire, ledit procédé comprenant une étape mise en oeuvre par le dispositif concentrateur de supprimer de la mémoire les paramètres d'identification après détection d'une déconnexion entre le terminal et le dispositif concentrateur.

10. Produit programme informatique comportant des instructions pour la mise en oeuvre du procédé selon la revendication 9, lorsque ce programme est exécuté par un processeur.

## Patentansprüche

1. Konzentratorvorrichtung, die dazu konfiguriert ist, mit einem Endgerät dank einer drahtlosen Nahfeldverbindung zu kommunizieren, wobei die Konzentratorvorrichtung in der Lage ist, sich ferner mit einem Fernservice zu verbinden, wobei die Vorrichtung dazu konfiguriert ist:
/a/ von dem Endgerät eine Zugriffsanforderung auf den Fernservice zu empfangen, wobei die Zugriffsanforderung Parameter zur Identifikation bei dem Service umfasst,
/b/ die Identifikationsparameter der empfangenen Anforderung im Speicher zu speichern, um zum Fernservice eine zweite Zugriffsanforderung zu senden, welche die Identifikationsparameter umfasst,
/c/ bei Antwort des Fernservice auf die zweite Anforderung eine Übertragung von den Service betreffenden Daten vorzunehmen,
wobei das Speichern der Identifikationsparameter der vom Endgerät empfangenen Anforderung vorübergehend ist, wobei die Konzentratorvorrichtung ferner dazu konfiguriert ist, die Identifikationsparameter nach Erkennen einer Verbindungstrennung zwischen dem Endgeräte und der Konzentratorvorrichtung aus dem Speicher zu löschen.

2. Vorrichtung nach Anspruch 1, die eine Vielzahl von Verbindungsports umfasst und ferner dazu konfiguriert ist:
- einen Port der Vorrichtung in Abhängigkeit von der Anforderung zu identifizieren und
- bei Antwort des Fernservice auf die zweite Anforderung den identifizierten Port dem Fernservice zuzuordnen.

3. Vorrichtung nach Anspruch 2, bei welcher der Fernservice eine Verwendung von aus dem Endgerät stammenden Daten umfasst, wobei die Konzentratorvorrichtung mindestens einen Verbindungsport zu einem Speicher umfasst und ferner dazu eingerichtet ist:
- vom Endgerät die Zugriffsanforderung auf den Fernservice und an den Fernservice zu übertragende Daten zu empfangen,
- in Abhängigkeit von der Anforderung den Verbindungsport zum Speicher zu identifizieren, um die vom Endgerät empfangenen Daten im Speicher zu speichern, und
- bei Antwort des Fernservice die Daten aus dem Speicher zum Fernservice zu übertragen.

4. Vorrichtung nach Anspruch 3, die ferner dazu eingerichtet ist, die vom Endgerät empfangenen Daten mindestens nach dem Erkennen eines Datenübertragungsendes aus dem Speicher zu löschen.

5. Vorrichtung nach Anspruch 2, bei welcher der Fernservice eine Übertragung von Multimediadaten umfasst, die von einem Multimedia-Wiedergabegerät gelesen werden sollen, wobei die Konzentratorvorrichtung mindestens einen Verbindungsport zu einem Multimedia-Wiedergabegerät umfasst und ferner dazu eingerichtet ist:
- vom Endgerät die Zugriffsanforderung auf den Fernservice zu empfangen,
- in Abhängigkeit von der Anforderung den Verbindungsport zum Multimedia-Wiedergabegerät als Wiedergabegerät zu identifizieren, das in der Lage ist, eine der Anforderung zugeordnete Art von Multimediadaten zu lesen, und
- bei Antwort des Fernservice die Daten zu dem Wiedergabegerät zu übertragen, das geeignet ist, die der Anforderung zugeordneten Multimediadaten zu lesen.

6. Vorrichtung nach einem der Ansprüche 2 bis 5, die in der Lage ist, sich mit den Fernservice über eine Programmierschnittstelle zu verbinden, um über die Programmierschnittstelle die zweite Zugriffsanforderung auf den Fernservice zu senden, wobei die Programmierschnittstelle eine Korrespondenztabelle verwendet, um einen Port der Vorrichtung in Abhängigkeit von der Anforderung zu identifizieren und den identifizierten Port dem Fernservice zuzuordnen.

7. Vorrichtung nach einem der vorhergehenden Ansprüche, die ferner dazu konfiguriert ist, die Identifikationsparameter mindestens nach dem Erkennen eines Datenübertragungsendes aus dem Speicher zu löschen.

8. Vorrichtung nach einem der vorhergehenden Ansprüche, die dazu konfiguriert ist, auf den Fernservice über ein Gateway zwischen einem Nahbereichsnetz und einem Fernbereichsnetz zuzugreifen, wobei der Service über das Fernbereichsnetz zugänglich ist.

9. Verfahren zur Verbindung mit einem Fernservice über eine Vorrichtung von der Art eines Konzentrators, wobei die Konzentratorvorrichtung dazu konfiguriert ist, mit einem Endgerät, das den Zugriff auf den Service anfordert, dank einer drahtlosen Nahfeldverbindung zu kommunizieren, wobei die Konzentratorvorrichtung in der Lage ist, sich ferner mit dem Fernservice zu verbinden, wobei das Verfahren die folgenden, von der Konzentratorvorrichtung ausgeführten Schritte umfasst:
/a/ von dem Endgerät eine Zugriffsanforderung auf den Fernservice zu empfangen, wobei die Zugriffsanforderung Parameter zur Identifikation bei dem Service umfasst,
/b/ die Identifikationsparameter der empfangenen Anforderung im Speicher zu speichern, um zum Fernservice eine zweite Zugriffsanforderung zu senden, welche die Identifikationsparameter umfasst,
/c/ bei Antwort des Fernservice auf die zweite Anforderung eine Übertragung von den Service betreffenden Daten vorzunehmen,
wobei das Speichern der Identifikationsparameter der vom Endgerät empfangenen Anforderung vorübergehend ist, wobei das Verfahren einen von der Konzentratorvorrichtung ausgeführten Schritt umfasst, die Identifikationsparameter nach dem Erkennen einer Verbindungstrennung zwischen dem Endgerät und der Konzentratorvorrichtung aus dem Speicher zu löschen.

10. Computerprogramm mit Anweisungen zum Ausführen des Verfahrens nach Anspruch 9, wenn dieses Programm von einem Prozessor abgearbeitet wird.

## Claims

1. Hub device, configured so as to communicate with a terminal through a short-distance wireless connection, the hub device furthermore being able to connect to a remote service, the device being configured so as to:
/a/ receive a request to access the remote service from the terminal, the access request comprising identification parameters for said service,
/b/ store in memory the identification parameters of the received request, in order to send a second access request comprising the identification parameters to the remote service,
/c/ upon response from the remote service to the second request, perform a transfer of data in relation to the service,
the storage in memory of the identification parameters of the request received from the terminal being temporary,
the hub device furthermore being configured so as to delete the identification parameters from memory after detection of a disconnection between the terminal and the hub device.

2. Device according to Claim 1, including a plurality of connection ports, and furthermore being configured so as to:
- identify a port of the device on the basis of the request, and
- upon response from the remote service to the second request, associate the identified port with the remote service.

3. Device according to Claim 2, wherein the remote service includes use of data from the terminal, the hub device including at least one port for connection to a storage memory, and furthermore being designed to:
- receive, from the terminal, the request to access the remote service, and data to be transferred to the remote service,
- identify, on the basis of the request, the port for connection to the storage memory, in order to store the data received from the terminal in the storage memory, and
- upon response from the remote service, transfer the data from the storage memory to the remote service.

4. Device according to Claim 3, furthermore being designed to delete the data received from the terminal from the storage memory at least after detection of an end of transfer of the data.

5. Device according to Claim 2, wherein the remote service includes transmission of multimedia data in order to be read by a multimedia rendering apparatus, the hub device including at least one port for connection to a multimedia rendering apparatus, and furthermore being designed to:
- receive the request to access the remote service from the terminal,
- identify, on the basis of the request, the port for connection to the multimedia rendering apparatus, as rendering apparatus able to read a type of multimedia data associated with the request, and
- upon response from the remote service, transfer the data to said rendering apparatus able to read the type of multimedia data associated with the request.

6. Device according to one of Claims 2 to 5, being able to connect to the remote service via a programming interface, in order to send said second access request to the remote service via the programming interface, the programming interface using a correspondence table to identify a port of the device on the basis of the request and associate the identified port with the remote service.

7. Device according to one of the preceding claims, furthermore configured so as to delete the identification parameters from memory at least after detection of an end of transfer of data.

8. Device according to one of the preceding claims, configured so as to access the remote service via a gateway between a local area network and a wide area network, the remote service being accessible on the wide area network.

9. Method for connecting to a remote service via a hub device, the hub device being configured so as to communicate with a terminal requesting access to the service through a short-distance wireless connection, the hub device furthermore being able to connect to the remote service,
the method including the steps implemented by the hub device:
/a/ receiving a request to access the remote service from the terminal, the access request comprising identification parameters for said service,
/b/ storing in memory the identification parameters of the received request, in order to send a second access request comprising the identification parameters to the remote service,
/c/ upon response from the remote service to the second request, performing a transfer of data in relation to the service,
the storage in memory of the identification parameters of the request received from the terminal being temporary, said method comprising a step implemented by the hub device of deleting the identification parameters from memory after detection of a disconnection between the terminal and the hub device.

10. Computer program product including instructions for implementing the method according to Claim 9 when this program is executed by a processor.
